(19) Europäisches Patentamt

European Patent Office

Office européen des brevets

(11) **EP 0 748 775 A2**

(12) **EUROPEAN PATENT APPLICATION**

(43) Date of publication:
18.12.1996 Bulletin 1996/51

(51) Int. Cl.⁶: **C03C 1/00**, C03C 17/25, C03C 17/34

(21) Application number: 96108568.5

(22) Date of filing: 30.05.1996

(84) Designated Contracting States:
**DE FR GB IT**

(30) Priority: **30.05.1995 JP 132268/95**
**13.11.1995 JP 294106/95**

(71) Applicant: **CENTRAL GLASS COMPANY, LIMITED**
**Yamaguchi 755 (JP)**

(72) Inventors:
• **Akamatsu, Yoshinori,**
**c/o Central Glass Co., Ltd.**
**Matsusaka-shi, Mie 515 (JP)**
• **Nishida, Yoshihiro,**
**c/o Central Glass Co., Ltd.**
**Matsusaka-shi, Mie 515 (JP)**

(74) Representative: **Finsterwald, Martin, Dr. et al**
**Robert-Koch-Strasse 1**
**80538 München (DE)**

(54) **Water-repellent glass plate having minutely roughed metal-oxide base film**

(57) The invention relates to a multilayered water-repellent film formed on a glass substrate by the sol-gel process. The multilayered film has a metal oxide base film which has a minutely rough surface. This surface has an average surface roughness within a range of from 1 to 20 nm. This roughness is defined by the following equation (1):

$$Ra' = \frac{1}{So} \int_{Y_B}^{Y_T} \int_{X_L}^{X_R} |\, F(X,Y) - Zo \,|\, d_X\, d_Y \qquad (1)$$

where Ra' represents said average surface roughness; Provided that said film has an ideally flat surface, So represents an area of said ideally flat surface and is found by $|\, X_R - X_L \,| \times |\, Y_T - Y_B \,|$ ; F(X,Y) represents a height at a measuring point of (X,Y) in which X and Y respectively represents values of x and y coordinates which are rectangular coordinates on said ideally flat surface; x coordinate ranges from $X_L$ to $X_R$; y coordinate ranges from $Y_B$ to $Y_T$; and Zo is defined by the following equation (2) and represents a height of a mean plane which is made by converting a waviness of filtered wave of a profile curve of said minutely rough surface to a flat plane,

$$Zo = \frac{1}{So} \int_{Y_B}^{Y_T} \int_{X_L}^{X_R} F(X,Y)\, d_X\, d_Y \qquad (2)$$

where the symbols are defined as in the equation (1).

**FIG.2**

EP 0 748 775 A2

## Description

## BACKGROUND OF THE INVENTION

The present invention relates to a water-repellent glass plate and more particularly to a water-repellent glass plate having a multilayered water-repellent film formed on a glass substrate. This multilayered film has a first metal oxide film which is formed on the glass substrate and has a minutely roughed surface, and a second water-repellent film formed on the first metal oxide film. The film-forming method belongs to the sol-gel process. The multilayered water-repellent film is suitable for application, for example, to vehicular and architectural window glasses which are to be exposed to rain water.

There have been proposals to form on a glass substrate a multilayered water-repellent film having first and second layers. The first layer is adherent to the glass substrate, and the second layer is water-repellent. To increase adhesion of the second layer to the first layer, there have been some conventional methods to make the first layer's surface minutely rough. One example is etching the first layer with hydrofluoric acid, fluorine nitrate or the like. However, this method has the following drawbacks. Hydrofluoric acid and fluorine nitrate are very hazardous against human body. Therefore, these compounds must be handled very cautiously. This lowers the production efficiency. Furthermore, it is difficult to precisely control the thickness of the first layer.

Another example of the above-mentioned conventional methods is making the first layer minutely rough by the thermal decomposition of an organic polymer added to a metal alkoxide solution. However, this method has the following drawback. Micro-pits which make the first layer minutely rough tend to disappear by the densification of the first layer after being at a temperature not lower than 400 °C. This tends to make the first layer relatively flat.

There have been other proposals superior to the above-mentioned examples For example, Japanese Patent Unexamined Publication JP-A-5-147976 discloses a method of forming on a glass substrate a metal oxide film having a minutely rough surface. This method belongs to the sol-gel process. In this method, a coating solution for forming the metal oxide film comprises at least two sols prepared from at least one compound selected from the group consisting of metal alkoxides and metal acetylacetonates. The at least two sols, i.e. at least two polymers dispersed therein, have different average molecular weights. This method provides a metal oxide film which has a minutely rough surface having numerous micro-pits thereon.

JP-A-6-298545 discloses another method of forming on a glass substrate a metal oxide film having a minutely rough surface. In this method, a coating solution for forming the metal oxide film is a mixture of sols A and B. The sol A is prepared by hydrolyzing and polycondensing a metal alkoxide or metal acetylacetonate, which is tetrafunctional. The sol B is prepared by hydrolyzing and polycondensing a metal alkoxide or metal acetylacetonate, which is trifunctional or bifunctional.

JP-A-7-138050 discloses a method which is a modification of JP-A-6-298545. In this method, a coating solution for forming a metal oxide film having a minutely rough surface is a mixture of sols A and B which are the same as those of JP-A-6-298545 and a sol C which is prepared by hydrolyzing and polycondensing a metal alkoxide or metal acetylacetonate, which contains a metal different from the metals contained in the sols A and B.

JP-A-8-40748 discloses a multilayered water-repellent film having a first metal oxide film having a minutely rough surface and a second water-repellent film prepared by applying a special water- and oil-repellent solution. The first metal oxide layer has an average thickness ranging from about 10 to about 300 nm, and its surface is minutely rough such that the values of maximum height ($Ry$ or $Rmax$), center line average roughness ($Ra$), ten-point mean roughness ($Rz$) and mean spacing of profile irregularities ($Sm$), which are in accordance with Japanese Industrial Standard (JIS) B 0601 are respectively in a range from 5 to 60 nm, in a range from 2 to 20 nm, in a range from 5 to 55 nm and in a range from 5 to 700 nm.

## SUMMARY OF THE INVENTION

It is an object of the present invention to provide a coating solution for forming a first mecal oxide film on a glass substrate, which coating solution is prolonged in pot life and superior in stability.

It is another object of the present invention to provide a first metal oxide film formed on a glass substrate, which film is specifically minutely roughed, and superior in hardness, mechanical strength and durability.

It is still another object of the present invention to provide a method of forming such a first metal oxide film on a glass substrate.

It is a further object of the present invention to provide a multilayered water-repellent film which is formed on a glass substrate, and has a first metal oxide film and a second water-repellent film, a good adhesion of the second film to the first film, a good light resistance, a high transparency, a good abrasion resistance and a good durability.

It is a still further object of the present invention to provide a method of forming such a multilayered water-repellent film on a glass substrate.

According to a first aspect of the present invention, there is provided a metal oxide film formed on a glass substrate, said film being prepared by a sol-gel process and having a minutely rough surface, said surface having an average surface roughness within a range of from 1 to 20 nm, said roughness being defined by the following equation (1):

$$Ra' = \frac{1}{So} \int_{Y_B}^{Y_T} \int_{X_L}^{X_R} | F(X,Y) - Zo | \, d_X \, d_Y \qquad (1)$$

where Ra' represents said average surface roughness; Provided that said film has an ideally flat surface, So represents an area of said ideally flat surface and is found by $| X_R - X_L | \times | Y_T - Y_B |$; F(X,Y) represents a height at a measuring point of (X,Y) in which X and Y respectively represents values of x and y coordinates which are rectangular coordinates on said ideally flat surface; x coordinate ranges from $X_L$ to $X_R$; y coordinate ranges from $Y_B$ to $Y_T$; and Zo is defined by the following equation (2) and represents a height of a mean plane which is made by converting a waviness of filtered wave of a profile curve of said minutely rough surface to a flat plane,

$$Zo = \frac{1}{So} \int_{Y_B}^{Y_T} \int_{X_L}^{X_R} F(X,Y) \, d_X \, d_Y \qquad (2)$$

where the symbols are defined as in the equation (1).

According to a second aspect of the present invention, there is provided a method for forming the metal oxide film on a glass substrate. This method comprises the following steps of:

(a) mixing acetylacetone with a metal alkoxide which contains a metal other than silicon to prepare a first mixture, such that, even when water is added to said first mixture, said metal alkoxide is substantially suppressed in hydrolysis and polycondensation;

(b) adding said first mixture to a tetrialkoxysilane to prepare a second mixture;

(c) preparing a sol A, through hydrolysis and polycondensation of said tetraalkoxysilane, by adding water and an acid catalyst such as HCl or $HNO_3$ to said second mixture;

(d) preparing a sol B through hydrolysis and polycondensation of an alkyltrialkoxysilane in which one functional group has been alkylated;

(e) mixing together said sols A and B and a solvent containing isopropylalcohol as a major component thereof to prepare a first coating solution;

(f) applying said first coating solution to the glass substrate to form a sol film on the glass substrate; and

(g) healing said sol film to transform said sol film into said metal oxide film.

According to a third aspect of the present invention, there is provided a water-repellent glass plate comprising a glass plate,
the metal oxide film formed on the glass substrate, and a water-repellent film formed on the metal oxide film.

A metal oxide film according to the present invention, which is formed on a glass substrate, has a specifically minutely rough surface. That is, its surface has a particular average surface roughness (Ra') as described hereinabove. According to the invention, the surface roughness of the metal oxide film can be well controlled in a stable manner. The metal oxide film has a large specific surface area, and is superior in mechanical strength, chemical resistance, transparency, hardness and durability. When the metal oxide film is used as a base layer of a multilayered film, adhesion of an upper layer to the metal oxide film is substantially increased, due to the minute roughness of the metal oxide film. When a multilayered film is prepared by forming a water-repellent film on the metal oxide film, this multilayered film becomes superior in mechanical strength (particularly abrasion resistance), durability with respect to water repellency, and weatherability (light resistance). Thus, the metal oxide film is very effectively usable for vehicular and architectural window glasses.

According to the invention, the above-defined special parameter of the surface roughness, average surface roughness (Ra'), of the metal oxide film is well adjusted within the above range in a controlled manner. With this, the multilayered water-repellent film becomes superior in weatherability (light resistance), and its dispersion in weatherability becomes substantially small.

As stated above, acetylacetone is mixed with a metal alkoxide which contains a metal other than silicon to prepare a fist mixture, in the preparation of the sol A. It is noted that silicon is contained in a tetraalkoxysilane used in the preparation of the sol A and an alkyltrialkoxysilane used in the preparation of the sol B. In the first mixture, the metal alkoxide is stabilized. That is, acetylacetone is chelated with the metal alkoxide, and thus hydrolysis and polycondensation of the metal alkoxide is substantially suppressed, even when water is added to the first mixture. The addition of the thus stabilized metal alkoxide does not contribute to construct a three-dimensional structure of the metal oxide film, but contributes to increase the metal oxide film in compactness and durability such as mechanical strength, chemical resistance and the like.

It is considered that the use of a tetraalkoxysilane, as described as above, substantially contributes to a three dimensional structure of -Si-O-Si- (vertical two lines from each Si is omitted in this structure). In contrast, it is considered that the use of an alkyltrialkoxysilane, as described as above, does not substantially contribute to construct this three dimensional structure. Thus, it is considered that a mixture of the sols A and B contributes to make the structure of the metal oxide film uneven and thus to make the metal oxide layer's surface minutely rough.

## BRIEF DESCRIPTION OF THE DRAWINGS

Fig. 1 is a hypothetical sectional view, showing a first water-repellent layer which is directly chemically bonded to a metal oxide film;

Fig. 2 is a vied similar to Fig. 1, but showing a water-repellent film having the first water-repellent layer and a second water-repellent layer formed on the first layer;

Fig. 3 is a view similar to Fig. 1, but showing the first water-repellent layer which has been deteriorated by light;

Figs. 4-7 are photographs taken through a scanning electron microscope (SEM) of about 20,000 magnifications, each showing surface roughness of the first metal oxide film according to Example 1, prepared by applying the first coating solution to a glass substrate in an atmosphere of a relative humidity of 48% (Fig. 4), 53% (Fig. 5), 59% (Fig. 6) or 65% (Fig. 7);

Figs 8-11 are photographs which are respectively similar to Figs. 4-7, but showing photographs taken through an atomic force electron microscope (AFM);

Figs. 12-15 are photographs which are similar to Figs. 4-7, but showing the first metal oxide films according to Example 2 and Comparative Examples 1-3;

Fig. 16 is a graph shoring the relationship between the average surface roughness (Ra') of the first metal oxide film and the contact angle of water drop on the water-repellent film, after the super UV accelerated weatherability test; and

Fig. 17 is a graph showing the relationship between the average surface roughness (Ra') of the first metal oxide film and the initial haze value of the water-repellent film.

## DESCRIPTION OF THE PREFERRED EMBODIMENTS

According to the present invention, there is provided a multilayered water-repellent film, and a method of forming the same on a glass substrate. The multilayered film has a first metal oxide film formed on the glass substrate and a second water-repellent film formed on the first film. This glass substrate may be colorless or colored as long as it is transparent. The glass substrate may be flat or curved in shape, a tempered one, or a laminated glass.

In a method of forming the first metal oxide film on a glass substrate, a first coating solution for forming the same is prepared by mixing sols A and B. The sol A is prepared as follows. At first, acetylacetone is added to a metal alkoxide containing a metal other than silicon, to prepare a first mixture. In the first mixture, the metal alkoxide is stabilized, as explained above. Then, the first mixture is added to a tetraalkoxysilane. Then, the tetraalkoxysilane Is hydrolyzed and polycondensed to prepare the sol A, by adding water to the first mixture. Upon this, it should be noted that the stabilized metal alkoxide is substantially suppressed in hydrolysis and polycondensation. The sol B is prepared by hydrolyzing and polycondensing an alkyltrialkoxysilane of which one functional group has been alkylated. The thus prepared sols A and B are mixed together in amounts such that the weight ratio, on an oxide basis, of the alkyltrialkoxysilane to the tetraalkoxysilane is in a range, for example, from 2:1 to 6:1, preferably from 2.5:1 to 5.5:1. Then, this mixture may be stirred at 30 °C for a period of time from 3 to 24 hr, or at 50 °C for a period of time from 1 to 12 hr. Then, the mixture is diluted with a solvent containing isopropyl alcohol as a main component thereof such that the first coating solution is adjusted, in viscosity, within a range, for example, from about 1 to about 10 cP, or from about 1 to about 5 cP. Then, the first coating solution is applied to a glass substrate, for example, in an atmosphere of 25 °C and of a relative humidity from 45 to 70% to form a sol film on the glass substrate. In this application, it is needless to say that the relative humidity range varies depending on the atmosphere temperature or the glass substrate temperature. Then, this sol film is dried to form a gel film. Then, this gel film is heated to form the first metal oxide film having a minutely rough surface.

The first coating solution for forming the first metal oxide film can be easily prepared as mentioned hereinabove, using easily available raw materials, and is sufficiently prolonged in pot life. The obtained first metal oxide film has a minutely rough surface as mentioned hereinabove, and is superior in mechanical film strength, chemical resistance, transparency, hardness and durability.

As stated above, tetraalkoxysilane and a metal alkoxide which is stabilized by acetylacetone are used in the preparation of the sol A. This tetraalkoxysilane is tetrafunctional and thus contributes to construct a three-dimensional structure of -Si-O-Si- where vertical two lines from each Si are omitted. In the preparation of the sol B, the above-mentioned alkyltrialkoxysilane is used. This compound has one alkyl group in the molecule, and thus does not contribute to construct the three-dimensional structure. Thus, the mixture of the sols A and B contributes to make the structure of the first metal oxide film uneven and thus to make the first metal oxide film's surface minutely rough. The metal alkoxide used in the preparation of the sol A contains a metal other than silicon, which is contained in the tetraalkoxysilane and the alkyltrialkoxysilane. The use of the stabilized metal alkoxide of which hydrolysis and polycondensation is substantially suppressed contributes to make the first metal oxide film compact and thus to make the same superior in durability with respect to mechanical strength and chemical resistance. Furthermore, the first metal oxide film's surface becomes minutely rough, with stable shapes and characteristics, in a controlled manner. The first metal oxide film is made of a mixture $SiO_2$ and $MO_X$ where M represents a metal derived from the metal contained in the metal alkoxide. The metal alkoxide is used in an amount such that the metal represented by M is in an amount of less than 10 mol%, based on the total number of moles of $MO_x$ and of $SiO_2$, which are contained in the first metal oxide film.

In the invention, the metal M which is contained in the metal alkoxide and other than silicon is not limited to a particular metal. Preferable examples of this metal are Ti, Al, Zr and mixtures of these metals. Preferable examples of the metal alkoxide are titanium tetra-n-butoxide $[Ti(O-n-C_4H_9)_4]$, aluminum tri-n-butoxide $[Al(O-n-C_4H_9)_3]$, zirconium tetra-n-butoxide $[Zr(O-n-C_4H_9)_4]$, and acetylacetonates of Ti, Al and Zr.

In the invention, preferable examples of the alkyltrialkoxy-silane used for preparing the sol B are methyltriethoxysilane $[CH_3Si(OC_2H_5)_3]$, methyltrimethoxysilane $[CH_3Si(OCH_3)_3]$, and the like.

As stated above, the tetraalkoxysilane and the alkyltrialkoxysilane, which respectively used in the preparation of the sols A and B, are respectively tetrafunctional and trifunctional. This difference in the number of functional group contributes to make the first metal oxide film specifically minutely rough. Furthermore, the molecular weight of each of first and second polymers which are respectively prepared by hydrolyzing and polycondensing the tetraalkoxysilane and the alkyltrialkoxysilane is preferably within a range of from 100 to 100,000. This molecular weight range also contributes to make the first metal oxide specifically minutely rough. If the molecular weight is less than 100, hydrolyses of the tetraalkoxysilane and of the alkyltrialkoxysilane may become insufficient. With this, the first coating solution can not be uniformly applied to a glass substrate, thereby to cause crawling of the same. If it is greater than 100,000, the first coating solution in the form of sol may turn into a gel, during storage. The molecular weight is more preferably from about 1,000 to about 50,000.

In the invention, examples of a solvent for preparing each of the sols A and B are alcohols such as isopropyl alcohol, butanol and ethanol. Of these, an alcohol containing isopropyl alcohol as a main component (e.g., in an amount of at least 50 wt% thereof) is particularly preferable. It is preferable to use a solvent in which butanol has been added to isopropyl alcohol, and more preferable to use a solvent in which about 10 wt% of the former has been added to the latter, for diluting the mixture of the sols A and B. The use of such solvent also contributes to make the first metal oxide film stably minutely rough.

In the invention, the mixing ratio of the sol B to the sol A is such that the weight ratio, on oxide basis, of the solid matter contained in the sol B to that contained in the sol A is preferably within a range from about 2:1 to about 6:1 and more preferably within a range from about 2.5:1 to about 5.5:1. If it is less than 2:1, the first metal oxide film's surface may become flat. If it is greater than 6:1, its surface may not become minutely rough.

In the invention, the relative humidity of an atmosphere where the first coating solution is applied is adjusted preferably within a range from about 45% to about 70%. With this, the first metal oxide film's surface becomes stably minutely rough with good repeatability.

In the invention, viscosity of the first coating solution is adjusted preferably within a range from about 1 to about 10 cP and more preferably within a range from about 1 to about 5 cP. If it is less than 1 cP, the viscosity may become too low. With this, the first metal oxide film may not be formed. If it is greater than 10 cP, the first coating solution may be applied in a too much amount. With this, the film may have cracks therein during the drying or heating step.

In the invention, the first coating solution has a solid matter concentration, on oxide basis, within a preferable range of from 0.2 to 5 wt%. If it is less than 0.2 wt%, the first coating solution may become too thin to form a film. If it is greater than 5 wt%, the film thickness may become too thick. With this, it may be difficult to keep the average surface roughness (Ra') within a range of the invention. Furthermore, the film may have cracks therein, or blushing of the film may be caused.

In the invention, the coating method of the first coating solution is not particularly limited. Its examples are flow coating with nozzles, dip coating, spraying, reverse roller coating, flexo printing, other printings, curtain flow coating, spin coating, and combinations of these coating methods.

In the invention, a sol film prepared by applying the first coating solution to a glass substrate is dried and then heated at a temperature preferably within a range from about 100 to about 700 °C and more preferably within a range from about 500 to about 680 °C. The film is improved in strength by heating at a temperature of at least about 600 °C. This heating is, for example, conducted in the bending and/or tempering process of the coated glass plate. It should be noted that the minute roughness on the first metal oxide film does not disappear even by this heating of at least about 600 °C.

As stated above, the first metal oxide film has a specifically minutely rough surface having an average surface roughness (Ra') within a range of from 1 to 20 nm. Ra' is defined by the above equation (1). Ra' is found from the observation results of the surface roughness, for example, using a scanning probe microscope with a AFM (atomic force microscope) mode. The observation may be made by 5 $\mu m^2$ scanning with such microscope (e.g., SPI3700 (trade name) of Seiko Denshi Co. or NV2000 (trade name) of Olympus Co.). Ra' is a parameter made by converting the center line average roughness (Ra) which is defined in JIS B 0601 and determined by a two-dimensional measurement, to a surface roughness parameter which is determined by a three-dimensional measurement. Ra' is also defined as the average of the absolute value of a deviation between the reference plane and the designated plate.

As stated above, Ra' is in a range from 1 to 20 nm. If Ra' is less than 1 nm, the water-repellent multilayered film becomes insufficient in weatherability (light resistance) with respect to water repellency. The initial contact angle of water drop on the water-repellent film is preferably at least about 80 degrees and more preferably at least about 100 degrees. If Ra' is greater than 20 nm, the multilayered film does not become satisfactory in transparency. Regarding transparency, the multilayered film is preferably not higher than about 0.6% and more preferably not higher than about 0.3% in the initial haze value. Ra' is preferably from about 4 to about 16 nm. With this, the water-repellent multilayered film is further improved in water repellency and transparency. Ra' is more preferably from about 4 to about 15 nm. With this, the water-repellent multilayered film will have an initial haze value of not higher than about 0.3%, and a water-drop contact angle of at least about 90 degrees after a super UV accelerated weatherability test of about 500 hr.

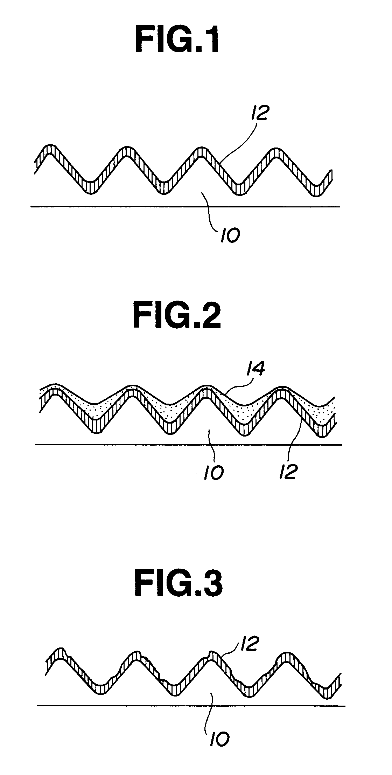

As is seen from Figs. 1-3, it is considered that the water repellent film formed on the first metal oxide film 10 has first and second water-repellent layers 12, 14. It is considered that this first layer 12 is a very thin film similar to a monomolecular layer and is directly chemically bonded to, for example, silica of the first metal oxide film 10. The second water-repellent layer 14 contains polymers which are chemically bonded to the first layer 12. These polymers are made by polymerization of a water-repellent agent such as fluoroalkylsilane. The second layer 14 has a so-called apparent thickness, as shown in Fig. 2, depending on the size and number of the polymers contained in the second layer 14, and the thickness of the second layer 14 has a great influence on the water-repellent multilayered film in weatherability (light resistance). Even if there is used a water-repellent agent (e.g., polytetrafluoroethylene) which does not directly react with the first metal oxide layer 10 in the preparation of the water-repellent film, the second layer 14 is formed in a manner to accumulate in the micro-pits of the first metal oxide film, as show in Fig. 2.

As the average surface roughness (Ra') becomes greater, the amount of the second water-repellent layer 14 in the micro-pits increases (see Fig. 2). With this, a so-called apparent thickness of the second layer 14 increases, and thus the water-repellent multilayered film is improved in light resistance. During the light deterioration of the water-repellent film, the second layer 14 is at first deteriorated, and then the first layer 12 is gradually deteriorated as show in Fig. 3.

The following nonlimitative Examples 1 to 3 are in accordance with the present invention.

Example 1

A multilayered water-repellent film consisting of a first metal oxide layer and a second water-repellent layer was formed on a glass substrate in accordance with the following steps.

Firstly, a clear float glass substrate having widths of about 600 mm and of about 900 mm and a thickness of about 5 mm was washed with neutral detergent, then with water and then with an alcohol. After drying the glass substrate, it was cleaned with acetone. The thus prepared glass substrate was used to be coated with a multilayered water-repellent film, as mentioned hereinafter.

Separately, a sol containing a tetraethoxysilane $[Si(OC_2H_5)_4]$ polymer having an average molecular weight of from about 1,000 to 3,000 was mixed with a mixture of acetylacetone and titanium tetrabutoxide $[Ti(O-C_4H_9)_4]$ in amounts such that the molar ratio, on oxide basis, of the titanium tetrabutoxide to $SiO_2$ was about 20:100. The thus prepared mixture was diluted with an alcohol solvent containing isopropyl alcohol (iPA), butanol and ethanol to adjust the solid matter concentration, on oxide basis, of the mixture to about 5 wt%, thereby to obtain a sol A. An example of commercial product for the sol A is CG19-Ti-I (trade name) of Daihachi Kagaku Kogyo Co.

Separately, a sol containing a polymer having an average molecular weight of about 1,000 was prepared by hydrolyzing and polycondensing methyltrimethoxysilane $[CH_3Si(OCH_3)_3]$. Then, this sol was diluted with isopropyl alcohol to obtain a solid matter concentration of about 20 wt% on oxide basis. With this, a sol B according to the invention was prepared. An example of commercial product for the sol B is MTS-2 (trade name) of Daihachi Kagaku Kogyo Co.

Then, 20 g of the sol A, 20 g of the sol B, and about 50 g of butanol containing 2,000 ppm of water were mixed together. This water content of butanol may be in a range from 150 to 3,500 ppm, or more than 3,500 ppm such as 5,000 ppm or 8,000 ppm. The thus prepared mixture was stirred at about 50 °C for about 3 hr under a tight sealing condition. This mixture was diluted with a solvent mixture containing 90 wt% of isopropyl alcohol and 10 wt% of n-butanol to obtain a first coating solution containing a solid matter concentration, on oxide basis, of from about 0.5 to about 1.5 wt%.

Then, the thus prepared first coating solution was applied to a glass substrate surface by a spin coating method in an atmosphere of about 25 °C and a relative humidity of about 48%, about 53%, about 59% or about 65%, thereby to form a first film thereon. Then, the coated glass substrate was allowed to stand still for about 5 min for air-drying. With this, there was obtained a first gel film having a minutely rough surface. Then, this gel film was preliminarily heated at about 250 °C for about 30 min, and then full heated at about 680 °C for a period of' time not longer than 4 min, thereby to obtain a first metal oxide $(SiO_2-TiO_2)$ film having a thickness of about 120 nm. This period of time for the full heating was considered to be actually about 10 seconds. The above-mentioned preliminary heating was conducted for increasing the film in hardness by evaporating or decomposing solvents and organic matters, and the full heating was conducted for further markedly increasing the film in hardness by decomposing organic matters, alkyl group, alkoxy group and the like.

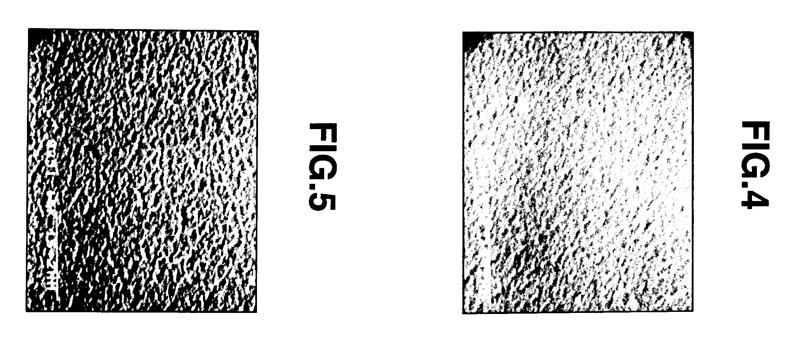

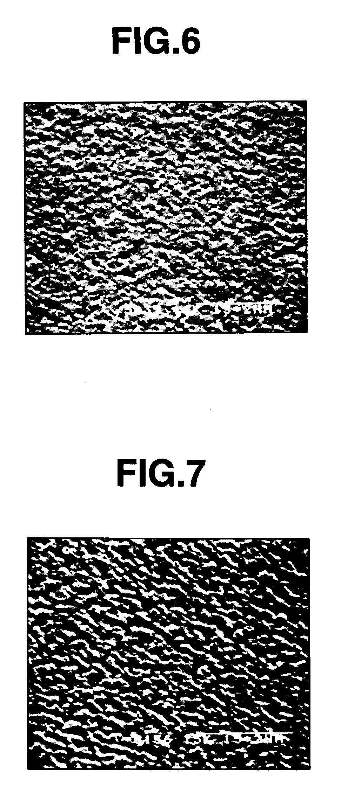

The first metal oxide film was subjected to the following evaluation tests. The surface conditions of the first metal oxide films which had been prepared by applying the first coating solution in atmospheres which have relative humidities of about 48%, about 53%, about 59% and about 65% were observed with SEM of 20,000 magnifications, and the results are respectively shown in Figs. 4-7.

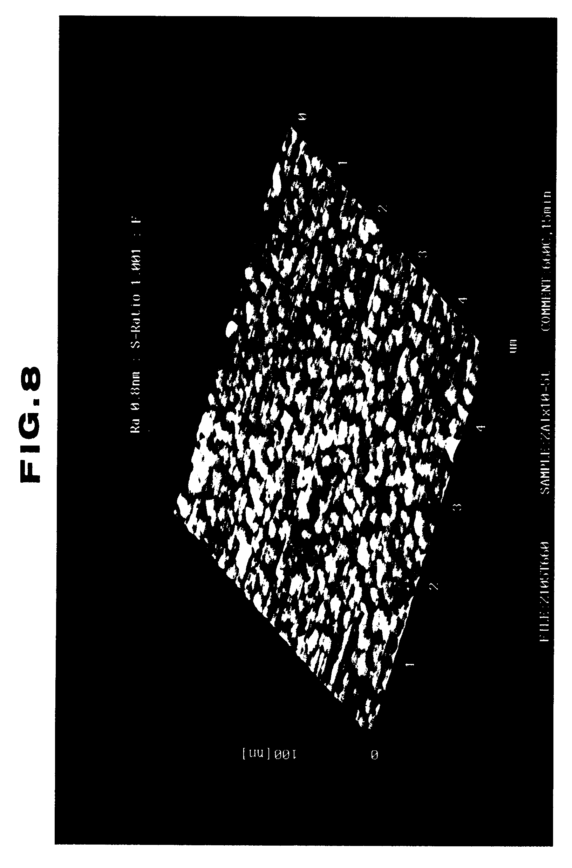

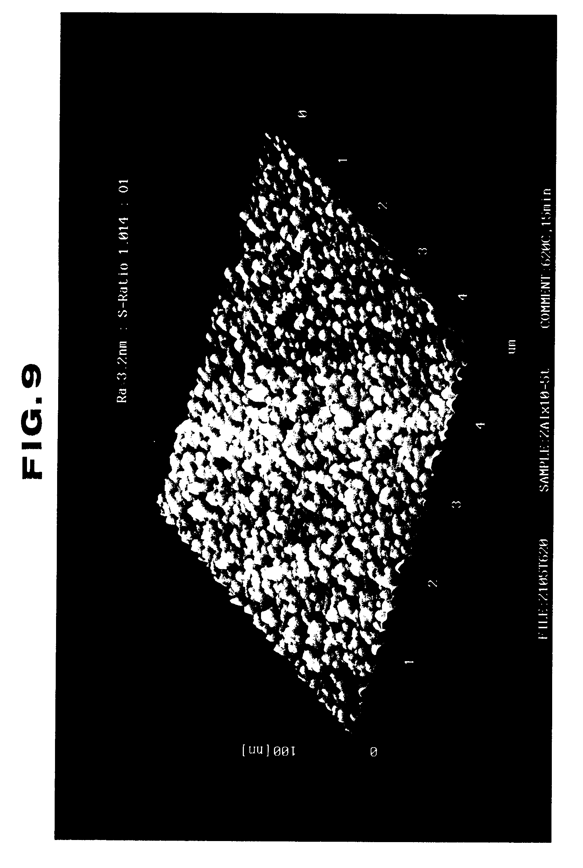

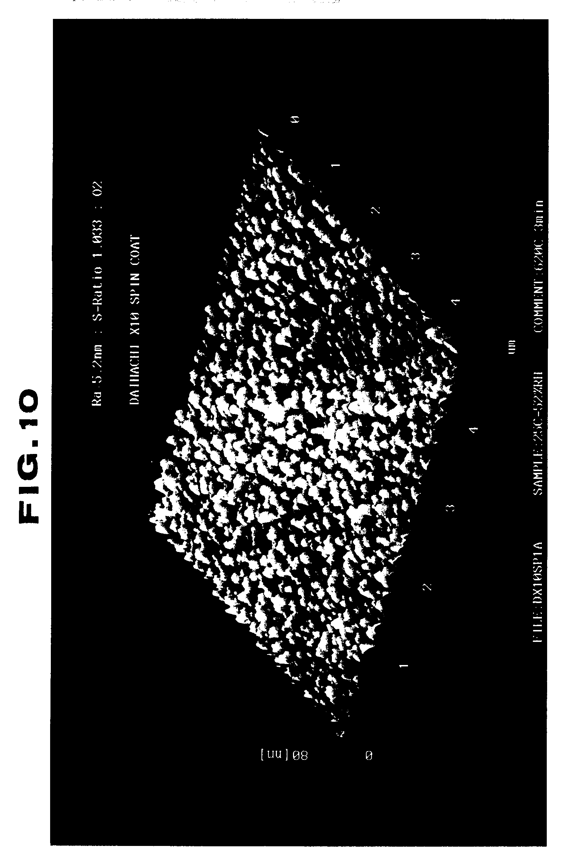

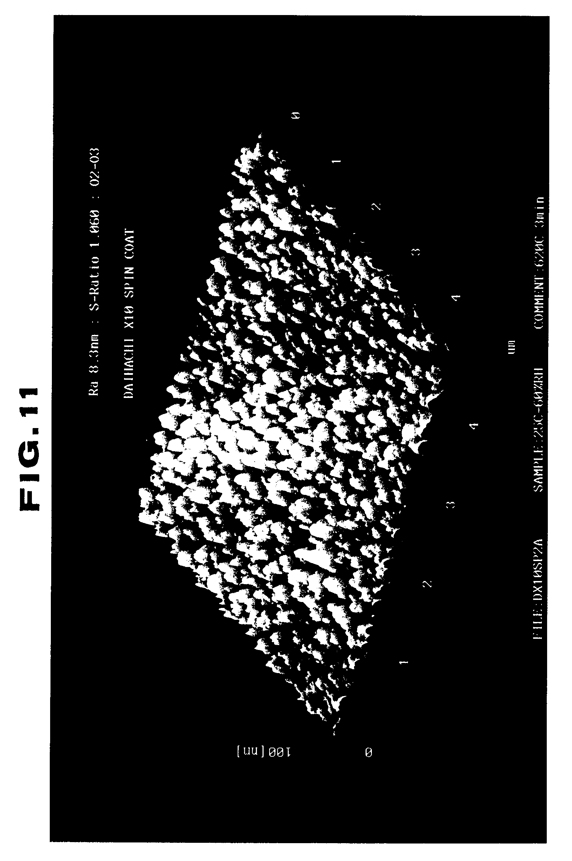

Furthermore, the surface condition of the first metal oxide film was observed with an atomic-force microscope to determine the average surface roughness (Ra). With this, it was found that the first metal oxide films prepared by applying the first coating solution under relative humidities of about 48%, about 53%, about 59% and about 65% were respectively about 3 nm, about 5 nm, about 8 nm and about 15 nm in average surface roughness (Ra). The observation results are respectively shown in Figs. 8-11. The initial haze value ($H_0$) of the first metal oxide film was measured by a haze meter. The result was satisfactory and similar to a glass substrate's initial haze value of about 0.1%.

Abrasion resistance of the first metal oxide film was evaluated by a Taber abrasion test. In this test, an abrasion wheel, CS-10F, was rotated 20 revolutions on the first metal oxide film. The degree of abrasion resistance of the film was valued by $\Delta H$, that is, the amount of a change in the haze value from the initial haze value. The result of abrasion resistance was also satisfactory and similar to a glass substrate's $\Delta H$ of from about 0.1 to about 0.2%.

Then, a second water-repellent film was formed on the first metal oxide film, as follows. Firstly, 1 g of hepta-decatridecyl-fluoroalkylsilane, $CF_3(CF_2)_7CH_2CH_2Si(OCH_3)_3$, was mixed with about 5 g of isopropyl alcohol and 1 g of 60% nitric acid in a beaker. This mixture was sufficiently stirred at room temperature so as to partially hydrolyze the fluoroalkylsilane. The thus prepared second coating solution was applied to the first metal oxide layer. Then, the coated glass substrate was put in an electric furnace of about 140 °C or of about 250 °C for about 30 min. With this, the second water-repellent layer was formed on the first metal oxide layer.

The thus formed glass substrate having thereon the multilayered water-repellent film was subjected to the following tests. To evaluate water repellency of the film, the contact angle of water drop on the film, the initial contact angle, was measured in the atmosphere of about 25 °C, by a CA-A type contact angle meter made by Kyowa Kaimen Kagaku Co. The initial contact angle was in a range of from about 110 to about 115 degrees. Furthermore, the coated glass plate's angle at which a water drop having a volume of 45 µl starts to fall down was measured. The result was as good as about 30 degrees.

Durability of the multilayered film was evaluated by an durability test using a practical wiper blade for an automobile window. Under a load of about 15 g/cm, the wiper blade was kept in contact with the film on the glass substrate and moved reciprocatively until it made about 180,000 successive rubbing passes. One reciprocation was counted as one pass. Tap water was dropped to the film during this test. After this test, the film surface was observed with the naked eye to check whether or not the film surface has scratches thereon. The degree of durability of the film was valued by the amount of a change in the contact angle of water drop from, the initial contact angle, the contact angle before this test. The results were satisfactory. In fact, scratches here not found on the film. The initial contact angle was about 112 degrees. The contact angle after the test was about 83 degrees, in case that the second film was heated at about 250 °C. It was about 80 degrees, in case that it was heated at about 140 °C.

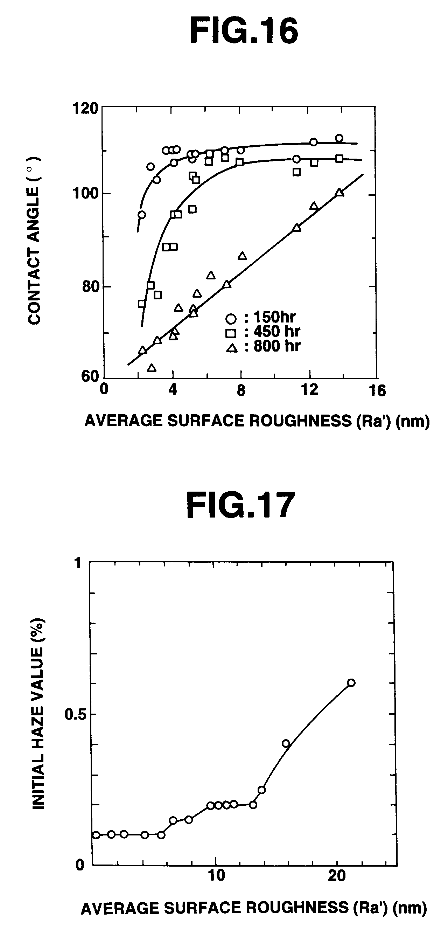

Weatherability (light resistance) of the multilayered film was evaluated by a super UV accelerated weatherability test. In this lest, the film was exposed to light rays of about 75 mW/cm$^2$ for about 150 hr, about 450 hr and about 800 hr at about 35 °C and a relative humidity of about 50% with a distance of about 25 mm between a lamp and the film. The degree of weatherability of the film was valued by the amount of a change in the contact angle of water drop from the contact angle before the weatherability test. The results were satisfactory. The relationship between the water drop contact angle after the weatherbility test and the average surface roughness (Ra') of the first metal oxide film is shown in Fig. 16. For example, when one sample having a Ra' of 8 nm of the first metal oxide film and an initial contact angle of about 112 degrees was subjected to the weatherbility test for about 800 hr, the contact angle after the test was maintained as high as about 90 degrees. This result corresponds to the actual maintenance of high water repellency for about 3 years, if the contact angle of from about 70 to about 80 degrees is set to be an acceptance standard.

In addition to the above-mentioned samples according to the invention, a sample not according to the invention was prepared by directly forming the second water-repellent film in a manner as mentioned hereinabove, with the omission of the first metal oxide film. This sample bad an initial contact angle of about 105 degrees, and its contact angle after the weatherbility test for about 230 hr decreased to about 60 degrees.

The relationship between the average surface roughness (Ra') of the first metal oxide film and the initial haze value of the multilayered film is shown in Fig. 17. As is seen from Fig. 17, when Ra' was less than about 20 nm, the initial haze value became a desirable value of less than about 0.6%. When Ra' was less than about 16 nm, the initial haze value became a preferable value of less than about 0.4%. When Ra' was less than about 14 nm, the initial haze value became a more preferable value of less than about 0.3%.

EXAMPLE 2

In this example, Example 1 was repeated except in that titanium tetrabutoxide was replaced by aluminum tributoxide [$Al(O-C_4H_9)_3$] in the preparation of the sol A, that the sols A and B and butanol were mixed together at about 30 °C for about 6 hr under a tight sealing condition, and that the first coating solution was applied to the glass substrate in an atmosphere of a relative humidity of about 53%, In this example, a first metal oxide film which is made of a mixture of $Al_2O_3$ and $SiO_2$ and has a thickness of about 74 nm was formed on the glass substrate.

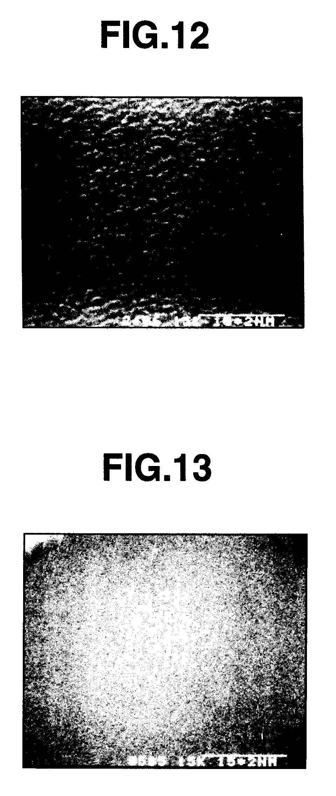

As is shown in Fig. 12, it was found by the observation with SEM of about 20,000 magnifications that the first metal oxide film's surface was minutely rough.

The first metal oxide film which had been formed on the glass substrate was subjected to the same evaluation tests as those in Example 1 . The initial haze value was about 0.1%. ΔH was about 0.6% which is somewhat inferior to that in Example 1, but is satisfactory in uses for automobile door and its rear window glass.

The water-repellent multilayered film which had been formed on the glass substrate was subjected to the same evaluation tests as those in Example 1. The results of these tests were similar to those of Example 1.

COMPARATIVE EXAMPLE 1

In this comparative example, Example 1 was repeated except in that the sols A and B were mixed together the a manner that the weight ratio of the solid matter contained in the sol A to that contained in the sol B becomes about 1:2, and that the sols A and B and butanol were mixed together at about 30 °C for about 6 hr under a tight sealing condition.

As is shown in Fig. 13, it was found by the observation with SEM of about 20,000 magnifications that the first metal oxide film's surface was similar to that of Example 1, but was relatively flat..

COMPARATIVE EXAMPLE 2

In this comparative example, Example 1 was repeated except in that the first coating solution was applied to the glass substrate in an atmosphere of about 25 °C and a relative humidity of about 40%.

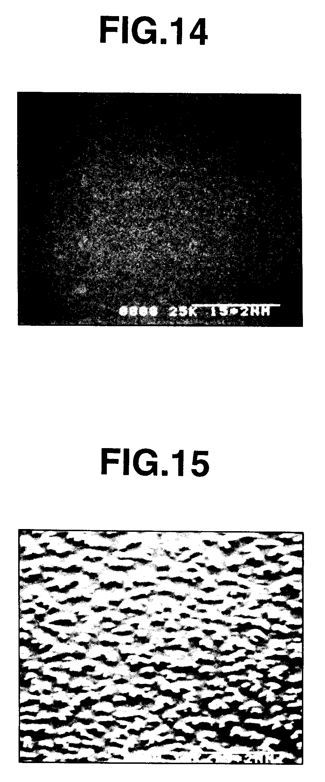

As is shown in Fig. 14, it was found by the observation with SEM of about 20,000 magnifications that the first metal oxide film's surface was similar to that of Example 1, but was relatively flat.

COMPARATIVE EXAMPLE 3

In this comparative example, Example 1 was repeated except in that the sols A and B were mixed together in a manner that the weight ratio of the solid matter contained in the sol A to that contained in the sol B is about 1:6, and that the sols A and B and butanol were mixed together at about 30 °C for about 24 hr under a tight sealing condition.

As is shown in Fig. 15, it was found by the observation with SEM of about 20,000 magnifications that the first metal oxide film's surface was not minutely rough as shown in Figs. 4-7 and 12, but had relatively large micro-projections thereon.

COMPARATIVE EXAMPLE 4

In this comparative example, Example 1 was repeated except in that the diluting solvent mixture containing 90 wt% of isopropyl alcohol and 10 wt% of butanol was replaced by a single solvent of isopropyl alcohol.

The water-repellent multilayered film was not desirably formed on a glass substrate.

**Claims**

1.  A metal oxide film formed on a glass substrate, said film being prepared by a sol-gel process and having a minutely rough surface, said surface having an average surface roughness within a range of from 1 to 20 nm, said roughness being defined by the following equation (1):

$$Ra' = \frac{1}{So} \int_{Y_B}^{Y_T} \int_{X_L}^{X_R} \mid F(X,Y) - Zo \mid d_X \, d_Y \qquad (1)$$

where Ra' represents said average surface roughness; Provided that said film has an ideally flat surface, So represents an area of said ideally flat surface and is found by $\mid X_R - X_L \mid \times \mid Y_T - Y_B \mid$ ; F(X,Y) represents a height at a measuring point of (X,Y) in which X and Y respectively represents values of x and y coordinates which are rectangular coordinates on said ideally flat surface; x coordinate ranges from $X_L$ to $X_R$; y coordinate ranges from $Y_B$ to $Y_T$; and Zo is defined by the following equation (2) and represents a height of a mean plane which is made by converting a waviness of filtered wave of a profile curve of said minutely rough surface to a flat plane,

$$Zo = \frac{1}{So} \int_{Y_B}^{Y_T} \int_{X_L}^{X_R} F(X,Y) \, d_X \, d_Y \qquad (2)$$

where the symbols are defined as in the equation (1).

2.  A metal oxide film according to Claim 1, wherein said average surface roughness is within a range of from 4 to 16 nm.

3.  A metal oxide film according to Claim 1, wherein said metal oxide film is prepared by a method comprising the following steps of:

    (a) mixing acetylacetone with a metal alkoxide which contains a metal other than silicon to prepare a first mixture, such that, even when water is added to said first mixture, said metal alkoxide is substantially suppressed in hydrolysis and polycondensation;

(b) adding said first mixture to a tetraalkoxysilane to prepare a second mixture;

(c) preparing a sol A, through hydrolysis and polycondensation of said tetraalkoxysilane, by adding water and an acid catalyst to said second mixture;

(d) preparing a sol B through hydrolysis and polycondensation of an alkyltrialkoxysilane in which one functional group has been alkylated:

(e) mixing together said sols A and B and a solvent containing isopropylalcohol as a major component thereof to prepare a first coating solution;

(f) applying said first coating solution to the glass substrate to form a sol film on the glass substrate; and

(g) heating said sol film to transform said sol film into said metal oxide film.

4. A metal oxide film according to Claim 3, wherein said metal contained in said metal alkoxide is one selected from the group consisting of Ti, Al, Zr and combinations of these.

5. A metal oxide film according to Claim 3, wherein, during the step (e), said sols A and B are mixed together in a manner that a weight ratio of said alkyltrialkoxysilane to said tetraalkoxysilane is adjusted within a range of from 2:1 to 6:1, on an oxide basis.

6. A metal oxide film according to Claim 3, wherein said solvent used in the step (e) further contains n-butanol.

7. A metal oxide film, according to Claim 3, wherein said first coating solution prepared in the step (e) has a solid matter concentration within a range of from 0.2 to 5 wt%, on an oxide basis.

8. A metal oxide film according to Claim 3, wherein the step (f) is conducted in an atmosphere having a relative humidity within a range of from 45 to 70%.

9. A metal oxide film according to Claim 3, wherein the step (f) is conducted in an atmosphere having a temperature of about 25 °C.

10. A water-repellent glass plate comprising:

a glass plate;
a metal oxide film formed on said glass substrate, said film being prepared by a sol-gel process and having a minutely rough surface, said surface having an average surface roughness within a range of from 1 to 20 nm said roughness being defined by the following equation (1); and
a water-repellent film formed on said metal oxide film,

$$Ra' = \frac{1}{So} \int_{Y_B}^{Y_T} \int_{X_L}^{X_R} |F(X,Y) - Zo| \, d_X \, d_Y \qquad (1)$$

where Ra' represents said average surface roughness; Provided that said film has an ideally flat surface, So represents an area of said ideally flat surface and is found by $|X_R - X_L| \times |Y_T - Y_B|$; F(X,Y) represents a height at a measuring point of (X,Y) in which X and Y respectively represents values of x add y coordinates which are rectangular coordinates on said ideally flat surface; x coordinate ranges from $X_L$ to $X_R$; y coordinate ranges from $Y_B$ to $Y_T$; and Zo is defined by the following equation (2) and represents a height of a mean plane which is made by converting a waviness of filtered wave of a profile curve of said minutely rough surface to a flat plane.

$$Zo = \frac{1}{So} \int_{Y_B}^{Y_T} \int_{X_L}^{X_R} F(X,Y) \, d_X \, d_Y \qquad (2)$$

where the symbols are defined as in the equation (1).

11. A water-repellent glass plate according to Claim 10, wherein said water-repellent film is prepared by applying a second coating solution containing a fluoroalkylsilane compound to said metal oxide film.

12. A method of forming a metal oxide film having a minutely rough surface, on a glass substrate, said method comprising the following steps of:

(a) mixing acetylacetone with a metal alkoxide which contains a metal other than silicon to prepare a first mixture, such that, even when water is added to said first mixture, said metal alkoxide is substantially suppressed In hydrolysis and polycondensation;

(b) adding said first mixture to a tetraalkoxysilane to prepare a second mixture;

(c) preparing a sol A, through hydrolysis and polycondensation of said tetraalkoxysilane, by adding water and an acid catalyst to said second mixture;

(d) preparing a sol B through hydrolysis and polycondensation of an alkyltrialkoxysilane in which one functional group has been alkylated;

(e) mixing together said sols A and B and a solvent containing isopropylalcohol as a major component thereof to prepare a first coating solution;

(f) applying said first coating solution to the glass substrate to form a sol film on the glass substrate; and

(g) heating said sol film to transform said sol film into said metal oxide film.

13. A method according to Claim 12, therein each of said sols A and B contains polymers which have an average molecular weight within a range of from 100 to 100,000.

14. A method according to Claim 12, wherein, during the step (e), said first coating solution is adjusted to have a viscosity from 1 to 10 centipoises.

15. A method according to Claim 12, wherein the step (g) is conducted at a temperature from 100 to 700 °C.

16. A method according to Claim 12, wherein said acid catalyst used in the step (c) is one of HCl and HNO$_3$.

17. A coating solution for forming a metal oxide film on a glass substrate, said coating solution being prepared by a method comprising the following steps of:

(a) mixing acetylacetone with a metal alkoxide which contains a metal other than silicon to prepare a first mixture, such that, even when water is added to said first mixture, said metal alkoxide is substantially, suppressed in hydrolysis and polycondensation;

(b) adding said first mixture to a tetraalkoxysilane to prepare a second mixture;

(c) preparing a sol A, through hydrolysis and polycondensation of said tetraalkoxysilane, by adding water to said second mixture;

(d) preparing a sol B through hydrolysis and polycondensation of an alkyltrialkoxysilane in which one functional group has been alkylated; and

(e) mixing together said sols A and B and a solvent containing isopropylalcohol as a major component thereof to prepare the coating solution.

# FIG.1

# FIG.2

# FIG.3

# FIG.4

# FIG.5

# FIG.6

# FIG.7

# FIG.8

Ra 0.8nm : S-Ratio 1.001 : F

EP 0 748 775 A2

FIG.9

## FIG.1O

## FIG.11

# FIG.12

# FIG.13

# FIG.14

# FIG.15

# FIG.16

# FIG.17